# EUROPEAN PATENT APPLICATION

(11) **EP 4 156 764 A1**
(43) Date of publication of application: **29.03.2023**
(21) Application number: 21808043.0
(22) Date of filing: 21.05.2021
(51) Int. Cl.: H04W 28/02, H04W 68/00, H04W 88/06

(54) **INFORMATION INDICATION METHOD AND APPARATUS, AND COMMUNICATION DEVICE**

(30) Priority: 22.05.2020 CN 202010444413
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Raffay & Fleck
(86) International application number: PCT/CN2021/095117
(87) International publication number: WO 2021/233414

(57) **Abstract**

Provided are an information indication method and apparatus, and a communication device, which relate to the technical field of wireless communications. The information indication method applied to a terminal comprises: sending first information to a network device of a first network, wherein the first information is used for at least one of the following: indicating that the terminal enters an unreachable state; indicating that the terminal stops receiving or cannot receive all pieces of data from the first network; indicating that the terminal stops receiving or cannot receive downlink data and/or paging from the first network; indicating that the terminal cannot give a paging response to the paging of the first network; indicating that the terminal cannot initiate a location update; and requesting caching or deletion of data regarding the terminal in the first network.

## Description

### CROSS-REFERENCE TO RELATED APPLICATIONS

This application claims priority to Chinese Patent Application No. 202010444413.4, filed in China on May 22, 2020, which is incorporated herein by reference in its entirety.

### TECHNICAL FIELD

The embodiments of this application relate to the technical field of wireless communication, and in particular, to an information indication method and apparatus and a communication device.

### BACKGROUND

In a current network, multi-card terminals are more and more commonly used, and multi-card terminals can have two or more SIM cards. The capacity of many multi-card terminals cannot support simultaneous transmission and reception in two or more networks. When the terminal sends and receives service data in a network of one SIM card, how to save network signaling and network resources in a network of another SIM card is a technical problem that needs to be solved urgently at present.

### SUMMARY

The embodiments of the application provide an information indication method and apparatus and a communication device, which are used for solving the problem that when the terminal sends and receives service data in a network of one SIM card, how to save network signaling and network resources in a network of another SIM card.

To resolve the foregoing technical problem, this application is implemented as follows:

According to a first aspect, an embodiment of the present application provides an information indication method, applied to a terminal, and including:
sending first information to a network device of a first network;
where the first information is used for at least one of the following:
   indicating that the terminal enters an unreachable state;
   indicating that the terminal stops receiving or cannot receive all data from the first network;
   indicating that the terminal stops receiving or cannot receive downlink data and/or paging from the first network;
   indicating that the terminal cannot respond to paging of the first network;
   indicating that the terminal cannot initiate location update; and
   requesting to buffer or delete data about the terminal in the first network.

According to a second aspect, an embodiment of this application provides an information indication method, applied to a network device, and including:
obtaining first information; and
executing a first operation according to the first information;
where the first information is used for at least one of the following:
   indicating that the terminal enters an unreachable state;
   indicating that the terminal stops receiving or cannot receive all data from the first network;
   indicating that the terminal stops receiving or cannot receive downlink data and/or paging from the first network;
   indicating that the terminal cannot respond to paging of the first network;
   indicating that the terminal cannot initiate location update; and
   requesting to buffer or delete data about the terminal in the first network;
the performing a first operation includes at least one of the following:
   saving the unreachable state of the terminal, saving the first information, stopping all paging about the terminal, suspending or deleting data about the terminal, suspending the configuration update of the terminal, sending the first information to other network devices, and informing other network devices that the terminal enters the unreachable state.

According to a third aspect, an embodiment of this application provides an information indication method, applied to a network device, and including one of the following:
acquiring second information, and executing a second operation according to the second information;
executing the second operation in a case of determining that the terminal enters a connection state with the first network; and
acquiring second information, and executing a second operation according to the second information when it is determined that the terminal enters a connection state with the first network;
where the second operation includes at least one of the following: deleting the unreachable state of the terminal, deleting the first information, notifying other network devices that the first information is invalid, notifying other network devices that the terminal enters the reachable state, restoring the configuration update of the terminal, and restoring the data transmission to the terminal;
where the second information is used for at least one of the following:
   indicating that the first information is invalid;
   indicating that the terminal exits from the unreachable state, or indicating that the terminal restores the reachable state;
   indicating that the terminal can receive the paging of the first network;
   indicating that the terminal can respond to the paging of the first network;
   indicating that the terminal requests to receive or can receive all data from the first network;
   indicating that the terminal requests to receive or can receive downlink data and/or paging from the first network;
   indicating that the terminal can initiate location update;
   requesting to receive data about the terminal;

According to a fourth aspect, an embodiment of the present application provides an information indication apparatus, applied to a terminal, and including:
a sending module configured to send first information to a network device of a first network;
where the first information is used for at least one of the following:
   indicating that the terminal enters an unreachable state;
   indicating that the terminal stops receiving or cannot receive all data from the first network;
   indicating that the terminal stops receiving or cannot receive downlink data and/or paging from the first network;
   indicating that the terminal cannot respond to paging of the first network;
   indicating that the terminal cannot initiate location update; and
   requesting to buffer or delete data about the terminal in the first network.

According to a fifth aspect, an embodiment of this application provides an information indication apparatus, applied to a network device, and including:
an acquisition module configured to acquire first information; and
a first execution module configured to execute a first operation according to the first information;
where the first information is used for at least one of the following:
   indicating that the terminal enters an unreachable state;
   indicating that the terminal stops receiving or cannot receive all data from the first network;
   indicating that the terminal stops receiving or cannot receive downlink data and/or paging from the first network;
   indicating that the terminal cannot respond to paging of the first network;
   indicating that the terminal cannot initiate location update; and
   requesting to buffer or delete data about the terminal in the first network;
the performing a first operation includes at least one of the following:
   saving the unreachable state of the terminal, saving the first information, stopping all paging about the terminal, suspending or deleting data about the terminal, suspending the configuration update of the terminal, sending the first information to other network devices, and informing other network devices that the terminal enters the unreachable state.

According to a sixth aspect, an embodiment of this application provides an information indication apparatus, applied to a network device, and including:
a second execution module configured to execute one of the following:
   acquiring second information, and executing a second operation according to the second information;
   executing the second operation in a case of determining that the terminal returns to the network, obtaining the connection establishment request of the terminal, obtaining the connection restoration establishment of the terminal, or determining that the terminal enters a connection state with the first network; and
   acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network;
   where the second operation includes at least one of the following: deleting the unreachable state of the terminal, deleting the first information, notifying other network devices that the first information is invalid, notifying other network devices that the terminal enters the reachable state, restoring the configuration update of the terminal, and restoring the data transmission to the terminal;
where the second information is used for at least one of the following:
   indicating that the first information is invalid;
   indicating that the terminal exits from the unreachable state, or indicating that the terminal restores the reachable state;
   indicating that the terminal can receive the paging of the first network;
   indicating that the terminal can respond to the paging of the first network;
   indicating that the terminal requests to receive or can receive all data from the first network;
   indicating that the terminal requests to receive or can receive downlink data and/or paging from the first network;
   indicating that the terminal can initiate location update; and
   requesting to receive data about the terminal.

According to a seventh aspect, an embodiment of the present invention provides a communications device, including a processor, a memory, and a computer program stored in the memory and executable on the processor, and when the computer program is executed by the processor, steps of the information indication method according to the first aspect are implemented, or steps of the information indication method according to the second aspect are implemented, or steps of the information indication method according to the third aspect are implemented.

According to an eighth aspect, an embodiment of the present application provides a readable storage medium, storing programs or instructions, where when the programs or instructions are executed by a processor, steps of the information indication method according to the first aspect are implemented, or steps of the information indication method according to the second aspect are implemented, or steps of the information indication method according to the third aspect are implemented.

According to a ninth aspect, an embodiment of the present application provides a chip, including a processor and a communication interface, where the communication interface is coupled with the processor, and the processor is configured to run programs or instructions of a network-side device to perform steps of the information indication method according to the first aspect are implemented, or steps of the information indication method according to the second aspect are implemented, or steps of the information indication method according to the third aspect are implemented.

It is not difficult to understand that, through this embodiment, when a terminal enters a temporarily unreachable state for a network, by sending the first information, the network can stop paging the terminal and stop a service of the terminal, signaling transmission, signing information synchronization, data transmission, etc., thus achieving the purpose of reducing network resource overheads.

### BRIEF DESCRIPTION OF DRAWINGS

With reference to detailed descriptions in preferable implementation manners in the following descriptions, various other advantages and benefits become clear to a person of ordinary skills in the art. The accompanying drawings are merely used to show the preferred implementations, and are not considered as limitations to the present application. In addition, in all the accompanying drawings, a same reference symbol is used to represent a same part. In the accompanying drawings:
FIG. 1 is a schematic flowchart of an information indication method according to an embodiment of the present application;
FIG. 2 is a schematic flowchart of an information indication method according to another embodiment of the present application;
FIG. 3 is a schematic flowchart of an information indication method according to another embodiment of the present application;
FIG. 4 is a schematic flowchart of an information indication method in application scenario 1 of the embodiment of the present application;
FIG. 5 is a schematic flowchart of an information indication method in application scenario 2 of the embodiment of the present application;
FIG. 6 is a schematic flowchart of an information indication method in application scenario 3 of the embodiment of the present application;
FIG. 7 is a structural diagram of an information indication apparatus provided in this application;
FIG. 8 is a structural diagram of another information indication apparatus provided in this application;
FIG. 9 is a structural diagram of another information indication apparatus provided in this application; and
FIG. 10 is a structural diagram of a communication device provided in this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of the present application without creative efforts shall fall within the protection scope of the present application.

The term "comprise/include" and any other variants in the description and the claims of this application mean to cover the non-exclusive inclusion, for example, a process, method, system, product, or device that includes a list of steps or units and is not necessarily limited to those steps or units, but may include other steps or units not expressly listed or inherent to such a process, method, product, or device. In addition, "and/or" used in the description and the claims means at least one of the connected objects. For example, A and/or B represents the following three cases: Only A exists, only B exists, and both A and B exist. The character "/"generally indicates that associated objects are in an "OR" relationship.

In the embodiments of the present application, the word such as "example" or "for example" is used to represent giving an example, an illustration, or a description. Any embodiment or design scheme described as "an example of" or "for example" in the embodiments of the present application should not be explained as being more preferred or having more advantages than another embodiment or design scheme. To be precise, the use of the term such as "exemplary" or "for example" is intended to present a related concept in a specific manner.

It should be noted that the technology described in the embodiments of the present application is not limited to the Long Term Evolution (Long Term Evolution, LTE)/LTE-Advanced (LTE-Advanced, LTE-A) system. It can also be applied in various wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA) and other systems. The terms "system" and "network" in the embodiments of this application are often used interchangeably, and the described technology can be used for the above-mentioned system and radio technology as well as other systems and radio technologies. However, a new radio (New Radio, NR) system is described in the following description for illustrative purposes, and the NR terminology is used in most of the following description, although these technologies can also be applied to applications other than the NR system application, such as the 6th generation (6^{th} Generation, 6G) communication system.

To better understand the embodiments of the present application, the following technical points are first described:

A multi-card terminal is a device with two or more SIM cards. The SIM card is an electronic SIM card or a physical SIM card. From the perspective of a network, a same terminal device and different SIM cards constitute different UEs.

Optionally, the SIM cards in the multi-card terminal may belong to the same operator or different operators. The wireless communication networks accessed by different SIM cards may be the same or different.

Optionally, the SIM card can include one of the following: a SIM card, a USIM card, and an eSIM. The SIM card can also be other names, such as "card" directly. This is not limited in this application.

Optionally, obtaining may be understood as obtaining from a configuration, obtaining through receiving, obtaining after receiving by using a request, obtaining through self-learning, obtaining through derivation based on information that is not received, or obtaining after processing based on received information. This may be specifically determined based on an actual requirement, and is not limited in the embodiments of the present application. For example, when indication information of a capability sent by a device is not received, it may be deduced that the device does not support the capability.

Optionally, sending may include broadcasting, broadcasting in a system message, and returning after responding to a request.

In order to save network resources, the following problems in scenario 1 should be solved:
Scenario 1: When the multi-card terminal sends and receives service data in a network corresponding to card B, the multi-card terminal can't do anything in a network of card A. For example, when the multi-card terminal leaves from card A and switches to the network of card B to listen to a call, the interval of each voice packet is 20ms. Even if the terminal can receive paging in the network of card A, the terminal cannot respond to the paging. This is because once the terminal switches to card A to respond to the paging, the current ongoing call is interrupted or user service experience is affected. In this case, the paging of the terminal in the network of card A causes waste of resources, and the problem of how to save network resources needs to be solved.

In an embodiment of the present application, the network device of the first network (or the first network device) can also be called a network element of the first network, including at least one of the following: a core network element of the first network and a radio access network element of the first network. The network device of the second network (or the second network device) can also be called the network element of the second network, including at least one of the following: a core network element of the second network and a radio access network element of the second network.

In an optional embodiment of the present application, the unreachable state may be different from a first type of unreachable state in which the terminal moves out of the coverage area of the network or the signal quality of the network is poor. The unreachable state is usually a second type of unreachable state caused by service conflicts between different networks (such as the network corresponding to card 1 and the network corresponding to card 2). For example, the user focuses on the service of the network corresponding to card 1, and the do not disturb mode is set, or data of the network corresponding to card 1 is continuous and there is no gap. Therefore, the terminal is temporarily unreachable for the network corresponding to the card 2. Once the service conflict ends, the unreachable state can be eliminated. Due to the service conflict, the terminal initiates the process of actively leaving from the network corresponding to card 2. In this process, the unreachable state can be indicated. The network can recognize that the unreachable state is an unreachable state in which the terminal leaves actively, which is different from the first type of unreachable state.

In an optional embodiment of the present application, the period in which the terminal leaves from the first network refers to the period in which the terminal actively leaves from the first network. The active leaving of the terminal from the first network includes a process that the terminal initiates the leaving from the network. The active leaving of the terminal from the first network may not include a process of releasing or suspending the connection with the network not initiated by the terminal.

In an embodiment of the application, the communication device may include at least one of the following: a network device and a terminal.

In an embodiment of the application, the network device may include at least one of the following: a core network element and a radio access network element.

In the embodiments of the present application, the core network network element (a CN network element) may include, but is not limited to, at least one of the following: a core network device, a core network node, a core network function, a core network network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gateway, PDN gateway), a policy control function (Policy Control Function, PCF), a policy and charging rules function (Policy and Charging Rules Function, PCRF) unit, a serving GPRS support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), and an application function (Application Function, AF).

In the embodiments of the present application, the RAN network element may include but is not limited to at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved NodeB, eNB), a 5Gbase station (gNB), a radio network controller (Radio Network Controller, RNC), a NodeB (NodeB), a non-3GPP interworking function (Non-3GPP Inter Working Function, N3IWF), an access controller (Access Controller, AC) node, an access point (Access Point, AP) device, a wireless local area network (Wireless Local Area Networks, WLAN) node, and N3IWF.

The base station may be a base transceiver station (BTS, Base Transceiver Station) in GSM or CDMA, a NodeB (NodeB) in WCDMA, an evolved NodeB (eNB or e-NodeB, evolutional NodeB) in LTE, or a 5G gNodeB (gNB), which is not limited in the embodiment of the present application.

In the embodiments of the present application, the terminal may include a relay that supports a terminal function and/or a terminal that supports a relay function. The terminal may also be referred to as a terminal device or user equipment (User Equipment, UE). The terminal may be a terminal side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or an in-vehicle device. It should be noted that a specific type of the terminal is not limited in the embodiments of the present application.

The information indication method of the embodiments of the present application will be described below.

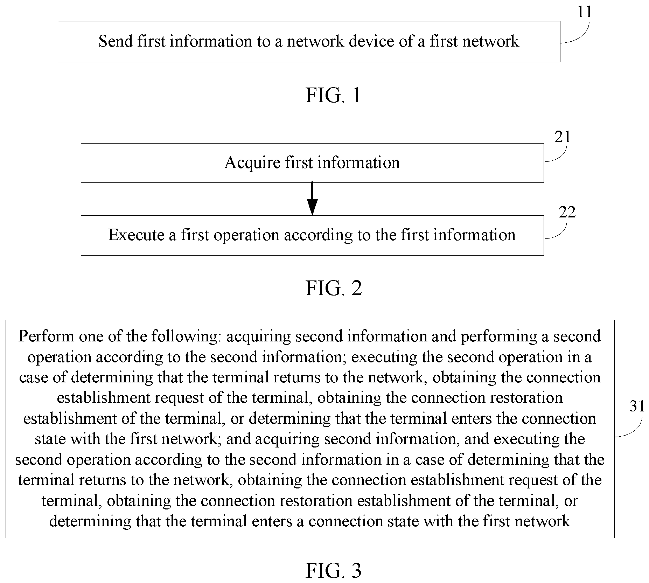

Referring to FIG. 1, an embodiment of the present application provides an information indication method, applied to a terminal, where the terminal is a multi-card terminal and may have two or more SIM cards. The method includes the following steps:
Step 11: Send first information to a network device of a first network.

In this embodiment, the first information can be used for at least one of the following:
indicating that the terminal enters an unreachable state;
indicating that the terminal stops receiving or cannot receive all data from the first network;
indicating that the terminal stops receiving or cannot receive downlink data and/or paging from the first network;
indicating that the terminal cannot respond to paging of the first network; for example, indicating that the terminal may subsequently be incapable of responding to paging of the first network;
indicating that the terminal cannot initiate location update; and
requesting to buffer or delete data about the terminal in the first network; for example, requesting to cache or delete all data about the terminal in the first network.

It should be noted that the indicating that the terminal enters an unreachable state may include: indicating that the terminal enters the temporarily unreachable state. The unreachable state of the terminal is usually caused by service conflicts between different networks (such as the network corresponding to card 1 and the network corresponding to card 2).

Optionally, the step 11 may include: sending, by the terminal, the first information to the network device of the first network in a case that it is determined that a first condition is met.

Optionally, meeting the first condition may include at least one of the following:
the terminal enters an unreachable state for the first network;
the terminal cannot respond to the paging of the first network, or the terminal cannot respond to the paging of the first network during active leaving of the terminal from the first network;
the terminal cannot receive the paging of the first network, or the terminal cannot receive the paging of the first network during active leaving of the terminal from the first network;
a service of the terminal in the first network conflicts with a service in a second network, resulting in that the terminal is unreachable for the first network, cannot receive the paging of the first network, and/or cannot respond to the paging of the first network;
the terminal switches to the second network; and
the terminal is a multi-card terminal.

The terminal enters an unreachable state for the first network not because the signal of the first network is bad, and instead because of other non-signal quality reasons (such as service conflict with the second network).

In an implementation, the first network is the network of SIM card A, and the second network is the network of SIM card B. The first network and the second network may be the same network or different networks.

In an implementation, the terminal entering the unreachable state includes: the terminal enters the unreachable state in a period in which the terminal leaves from the first network.

In an implementation, the terminal entering the unreachable state is the terminal entering the unreachable state for the first network. For example, the terminal is a multi-card terminal, and may be temporarily unreachable for the first network in a period in which the terminal leaves the first network to receive or transmit service data in the second network (such as voice services). In this case, by sending the first information, signaling of the first network, such as paging signaling, can be saved.

In an implementation, the location update can be at least one of the following: periodic location update and mobility location update. Periodic location update is, for example, initiating a periodic tracking area update (Tracking Area Update, TAU) request and a periodic registration request. Mobility location update is, for example, initiating a mobility TAU request and a mobility registration request.

In an implementation, the paging includes one of the following: CN paging and RAN paging. The CN paging is a paging initiated by the CN when the terminal is in a Radio Resource Control (Radio Resource Control, RRC) idle state. The RAN paging is a paging initiated by the RAN when the terminal is in RRC inactive state.

In an implementation, the terminal can send the periodic location update in advance, which means that the terminal can send the periodic location update to the first network in advance before the period of the periodic location update arrives. It is not difficult to understand that when the network services corresponding to two cards conflict, the terminal can find a gap to update location. The network can negotiate with the terminal.

Optionally, to send the first information, the terminal may also receive notification information; where the notification information is used for notifying the terminal whether it is allowed to indicate active leaving when the terminal enters an unreachable state. For example, the terminal sends the first information only when the terminal is allowed to indicate active leaving. The notification information may be sent to the terminal by the network device of the first network or sent to the terminal by other networks.

Optionally, the sending the first information to the network device of the first network includes one of the following: sending, by the terminal, the first information to the first network while sending a terminal leaving indication; and sending, by the terminal, the first information to the first network while requesting to leave.

Optionally, the first information takes effect in a period in which the terminal leaves from the first network, or the first information takes effect when it is determined that the terminal leaves from the first network. In this case, the first information may be used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

Optionally, the requesting to buffer or delete data about the terminal in the first network may include at least one of the following:
requesting to buffer or delete control plane data about the terminal in the first network; and
requesting to buffer or delete user plane data about the terminal in the first network.

In an implementation, the requesting to buffer or delete data about the terminal in the first network includes: requesting to buffer or delete all data about the terminal in the first network.

In an implementation, the requesting to buffer or delete control plane data about the terminal in the first network includes: requesting to buffer or delete all control plane data about the terminal in the first network.

In an implementation, the requesting to buffer or delete user plane data about the terminal in the first network includes: requesting to buffer or delete all user plane data about the terminal in the first network.

In an implementation, the first information may additionally include information of a session channel (such as a PDU session) or a service type that requests to buffer or delete the data. The information of the session channel or service type can be used to indicate to request to delete or buffer data of the session channel or the service type.

Optionally, the indicating that the terminal stops receiving or cannot receive all data from the first network may include at least one of the following:
indicating that the terminal stops receiving or cannot receive all control plane data from the first network; and
indicating that the terminal stops receiving or cannot receive all user plane data from the first network.

In an implementation, the control plane data includes data sent through the control plane, including non-access stratum NAS signaling and/or data sent through NAS.

In this embodiment of this application, the terminal may also perform a third operation when it is determined that the second condition is met. where the third operation includes at least one of the following: switching to the first network, sending second information to the network device of the first network, and sending a connection establishment request or a connection resume request to the network device of the first network;

Optionally, the second information may be used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update; and
requesting to receive data about the terminal; for example, requesting to receive all data about the terminal.

Optionally, that the second condition is met may include at least one of the following:
the terminal exists from the unreachable state or restores the reachable state with the first network;
the terminal can receive the paging of the first network;
the terminal can respond to the paging of the first network;
the conflict between the service of the terminal in the first network and the service in the second network is canceled;
the terminal has sent the first information to the first network; that is, the terminal has sent the first information to the first network previously;
the terminal switches to the first network; and
the terminal is a multi-card terminal.

In an implementation, the terminal exiting from the unreachable state refers to the terminal exiting from the unreachable state for the first network, that is, the terminal can reach the first network.

In an implementation, when the terminal does not receive paging from the first network, does not send data to the first network, and/or does not have a service with the first network, the terminal may immediately execute the third operation when it is determined that the second condition is met.

It should be noted that not all services of the second network cause that the terminal is unreachable for the first network or cannot respond to the paging of the first network. In an implementation, when a terminal transmits and receives data of a first service in a second network, the first service may cause that the terminal is unreachable in the first network or cannot respond to the paging of the first network. In an implementation, when the terminal transmits and receives data of the second service in the second network, the second service does not cause that the terminal is unreachable in the first network or cannot respond to the paging of the first network. Therefore, it is not difficult to understand that, in order to prevent the terminal from losing the data of the first network, after the first service ends, even if the terminal still has a second service in the second network or there is no service related to the first network, the terminal needs to immediately perform the third operation for the first network, so that the first information sent previously becomes invalid.

It is not difficult to understand that, through this embodiment, when a terminal enters a temporarily unreachable state for a network, by sending the first information, the network can stop paging the terminal and stop a service of the terminal, signaling transmission, signing information synchronization, data transmission, etc., thus achieving the purpose of reducing network resource overheads.

Referring to FIG. 2, an embodiment of the present application also provides an information indication method, applied to a network device. The network device may be a network device of the first network. The method includes:
Step 21: Obtain first information.

In this embodiment, the first information can be used for at least one of the following:
indicating that the terminal enters an unreachable state;
indicating that the terminal stops receiving or cannot receive all data from the first network;
indicating that the terminal stops receiving or cannot receive downlink data and/or paging from the first network;
indicating that the terminal cannot respond to paging of the first network; for example, indicating that the terminal may subsequently be incapable of responding to paging of the first network;
indicating that the terminal cannot initiate location update; and
requesting to buffer or delete data about the terminal in the first network; for example, requesting to cache or delete all data about the terminal in the first network.

Step 22: Perform a first operation according to the first information.

In this embodiment, the performing the first operation may include at least one of the following:
saving the unreachable state of the terminal, saving the first information, stopping all paging about the terminal, suspending or deleting data about the terminal, suspending the configuration update of the terminal, sending the first information to other network devices, and informing other network devices that the terminal enters the unreachable state.

In an implementation, suspending or deleting data about the terminal may include suspending or deleting all data about the terminal. The method may further include: suspending or deleting all control plane data and/or data plane data about the terminal.

In an implementation, suspending the configuration update of the terminal includes: suspending the configuration update of the terminal when the subscription information of the terminal is changed, and updating is performed after the terminal becomes reachable.

In an implementation, the terminal being unreachable includes: the terminal is unreachable in a period in which the terminal leaves from the first network.

In an implementation, when the first information is saved, the first information can be saved to the unified data management UDM, so that the UDM does not trigger the subscription information update of the terminal temporarily.

In an implementation, after receiving the first information, the AMF in the first network stores the first information in the UDM. When the subscription information changes, UDM does not trigger the update of the terminal temporarily. UDM triggers subscription information update after the AMF updates that the terminal is reachable or can page.

In an implementation, the AMF receives a location request sent by the LMF, and replies that the terminal is temporarily unreachable. When the terminal is reachable, AMF informs other network nodes that the terminal is reachable.

In an implementation, before the terminal is reachable, the first network device can determine, based on the operator strategy or its own implementation, to lift the restriction previously imposed on the terminal, and initiate paging for the terminal at any time. If there is no response for more than a certain time, the first network device can detach the terminal based on the implementation.

Optionally, obtaining the first information may include one of the following: receiving the first information while receiving a leaving instruction of the terminal; and receiving the first information while receiving a leaving request of the terminal.

Optionally, the first information takes effect in a period in which the terminal leaves from the first network, or the first information takes effect when it is determined that the terminal leaves from the first network. In this case, the first information can be used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

Understandably, the period in which the terminal leaves from the first network may include: the period in which the terminal actively leaves from the first network, that is, a period from a moment at which the terminal requests to leave from the first network to a moment at which the terminal initiates connection establishment and connection recovery with the first network.

Optionally, the requesting to buffer or delete data about the terminal in the first network may include at least one of the following:
requesting to buffer or delete control plane data about the terminal in the first network; and
requesting to buffer or delete user plane data about the terminal in the first network.

In an implementation, the requesting to buffer or delete data about the terminal in the first network includes: requesting to buffer or delete all data about the terminal in the first network.

In an implementation, the requesting to buffer or delete control plane data about the terminal in the first network includes: requesting to buffer or delete all control plane data about the terminal in the first network.

In an implementation, the requesting to buffer or delete user plane data about the terminal in the first network includes: requesting to buffer or delete all user plane data about the terminal in the first network.

Optionally, the indicating that the terminal stops receiving or cannot receive all data from the first network may include at least one of the following:
indicating that the terminal stops receiving or cannot receive all control plane data from the first network; and
indicating that the terminal stops receiving or cannot receive all user plane data from the first network.

Optionally, performing the first operation according to the first information may include: in the period in which the terminal leaves from the first network, executing the first operation according to the first information.

In this embodiment of the application, the terminal may also perform one of the following:
acquiring second information, and executing a second operation according to the second information;
executing the second operation in a case of determining that the terminal returns to the network, obtaining the connection establishment request of the terminal, obtaining the connection restoration establishment of the terminal, or determining that the terminal enters a connection state with the first network; and
acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network.

In an embodiment, when the network device can be a network device of the first network, the determining that the terminal returns to the network is: determining that the terminal returns to the first network.

The second operation includes at least one of the following: deleting the unreachable state of the terminal, deleting the first information, notifying other network devices that the first information is invalid, notifying other network devices that the terminal enters the reachable state, restoring the configuration update of the terminal, and restoring the data transmission to the terminal.

Optionally, restoring the data transmission to the terminal may include restoring the transmission of control plane data and/or data plane data to the terminal.

Optionally, the second information can be used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update; and
requesting to receive data about the terminal; for example, requesting to receive all data about the terminal.

Therefore, by executing the second operation, the related network equipment can know that the terminal restores the reachable state with the first network, thus ensuring the smooth progress of services (such as receiving paging, responding to paging, receiving data, etc.) of the terminal in the first network.

It is not difficult to understand that, through this embodiment, when a terminal enters a temporarily unreachable state for a network, by sending the first information, the network can stop paging the terminal and stop a service of the terminal, signaling transmission, signing information synchronization, data transmission, etc., thus achieving the purpose of reducing network resource overheads.

Referring to FIG. 3, an embodiment of the present application also provides an information indication method, applied to a network device. The network device may be a network device of the first network (such as a RAN network element or a CN network element (such as an MME, an AMF, an SMF, an SGW, an HSS or a UDM)). As shown in FIG. 3, the method can include:

Step 31: Perform one of the following: acquiring second information and performing a second operation according to the second information; executing the second operation in a case of determining that the terminal returns to the network, obtaining the connection establishment request of the terminal, obtaining the connection restoration establishment of the terminal, or determining that the terminal enters the connection state with the first network; and acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network.

In an implementation, the determining that the terminal enters the connection state with the first network includes: establishing the connection between the terminal and the first network or restoring the connection between the terminal and the first network.

Optionally, the second operation includes at least one of the following: deleting the unreachable state of the terminal, deleting the first information, notifying other network devices that the first information is invalid, notifying other network devices that the terminal enters the reachable state, restoring the configuration update of the terminal, and restoring the data transmission to the terminal.

Optionally, restoring the data transmission to the terminal may include restoring the transmission of control plane data and/or data plane data to the terminal.

Optionally, the second information can be used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network; where the data includes control plane data and/or data plane data;
indicating that the terminal requests to receive or can receive downlink data and/or paging from the first network;
indicating that the terminal can initiate location update; and
requesting to receive data about the terminal; for example, requesting to receive all data about the terminal.

Therefore, by executing the second operation, the related network equipment can know that the terminal restores the reachable state with the first network, thus ensuring the smooth progress of services (such as receiving paging, responding to paging, receiving data, etc.) of the terminal in the first network.

The method provided by the embodiments of the present application is described below in combination with specific application scenarios.

### Application scenario 1

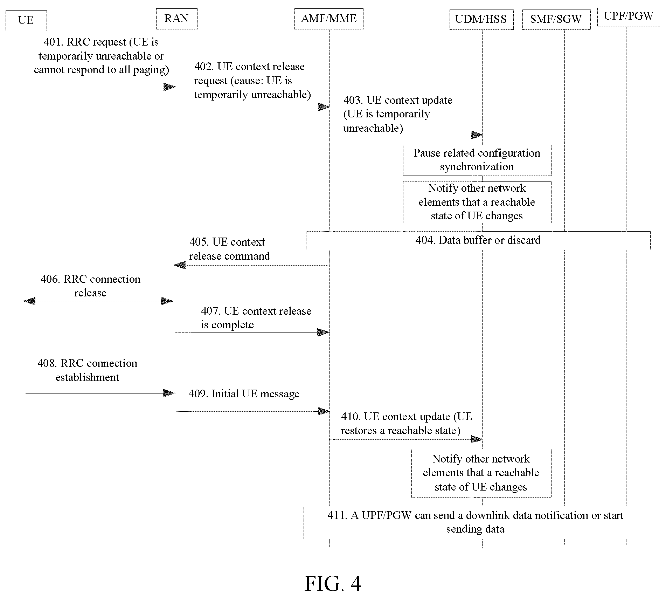

In application scenario 1, as shown in FIG. 4, the method used by the network to support saving network resources by means of the information indication of the terminal UE can include the following steps:
Step 401: The UE sends an RRC request to a RAN network element (such as the RAN network element of the first network). Optionally, the RRC request may include first information, such as indicating that the UE is temporarily unreachable or cannot respond to all paging. The first information can be specifically described in the embodiment of FIG. 1 above.
Step 402: The RAN network element sends a UE context release request to the AMF/MMF. Optionally, the UE context release request may include first information, such as indicating at least one of the following: the UE is temporarily unreachable or the UE is unreachable in a period in which the UE leaves from the first network; or indicating that the terminal cannot receive the paging of the first network.
Step 403: The AMF/MMF sends a UE context update request to a UDM/HSS. Optionally, the UE context update request may include first information, such as indicating that the UE is temporarily unreachable or that the UE is unreachable in a period in which the UE leaves from the first network. The UDM/HSS can store the first information and also inform other network entities that the reachable state of the UE changes.
Step 404: Through the interaction of the AMF/MMF with the SMF/SGW and the UPF/PGW, buffer or delete (discard) the control plane data or user plane data about the UE.
Step 405: The AMF/MMF sends a UE context release command to the RAN network element.
Step 406: The RAN network element connects to the released UE.
Step 407: The RAN network element sends UE context release complete to the AMF/MMF.
Step 408: Subsequently, the UE restores the reachable state to the first network, and the UE sends an RRC establishment request to the RAN network element. Optionally, the RRC request may include second information, such as indicating at least one of the following: the terminal exits from the temporarily unreachable state, or indicating that the terminal restores the reachable state; or indicating that the terminal can receive the paging of the first network. The second information can be specifically as described above.
Step 409: The RAN network element sends an initial UE message to the AMF/MMF. Optionally, the initial UE message may include second information.
Step 410: The AMF/MMF sends a UE context update request to a UDM/HSS. Optionally, the UE context update request may include second information, such as indicating that the UE restores the reachable state or can respond to paging. The UDM/HSS may notify other network entity that the reachable state of the UE changes.
Step 411: Through the interaction between the AMF/MMF and the SMF/SGW and the UPF/PGW, indicate that the UE restores the reachable state and the UPF/PGW can send a downlink data notification or start sending data.

Therefore, in application scenario 1, when the UE is temporarily unreachable or cannot respond to paging, NW.

### Application scenario 2

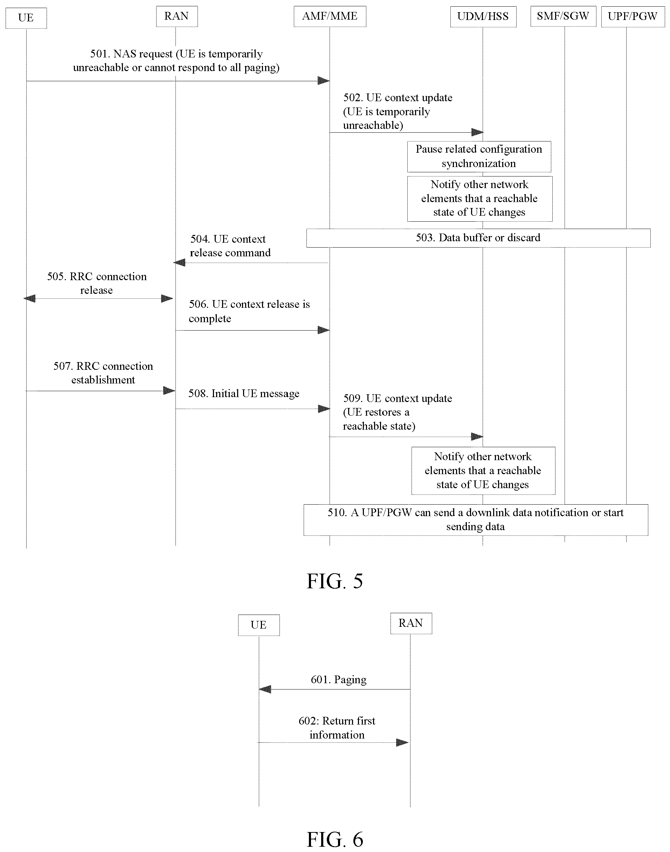

In application scenario 2, as shown in FIG. 5, the method used by the network to support saving network resources by means of the information indication of the UE can include the following steps:
Step 501: UE sends a NAS message to the AMF/MMF through a RAN network element. Optionally, the NAS message may include first information, such as indicating at least one of the following: the UE is temporarily unreachable or the UE is unreachable in a period in which the UE leaves from the first network; or indicating that the terminal cannot receive the paging of the first network. The first information can be specifically as described above.
Step 502: The AMF/MMF sends a UE context update request to a UDM/HSS. Optionally, the UE context update request may include first information, such as indicating at least one of the following: the UE is temporarily unreachable or the UE is unreachable in a period in which the UE leaves from the first network; or indicating that the terminal cannot receive the paging of the first network. The UDM/HSS can store the first information and also inform other network entities that the state of the UE changes.
Step 503: Through the interaction of the AMF/MMF with the SMF/SGW and the UPF/PGW, buffer or delete (discard) the control plane data or user plane data about the UE.
Step 504: The AMF/MMF sends a UE context release command to the RAN network element.
Step 505: The RAN network element connects to the released UE.
Step 506: The RAN network element sends UE context release complete to the AMF/MMF.
Step 507: Subsequently, the UE restores the reachable state to the first network, and the UE sends an RRC connection establishment request to the RAN network element.
Step 508: The RAN network element sends an initial UE message to the AMF/MMF. Through step 507 and step 508, optionally, the UE sends a NAS message to the AMF/MMF through the RAN network element. The NAS message may include second information, such as indicating at least one of the following: the terminal exits from the temporarily unreachable state, or indicating that the terminal restores the reachable state; or indicating that the terminal can receive the paging of the first network. The second information can be specifically as described above.
Step 509: The AMF/MMF sends a UE context update request to a UDM/HSS. Optionally, the UE context update request may include second information, such as indicating that the UE restores the reachable state or can respond to paging. The UDM/HSS may notify other network entity that the reachable state of the UE changes.
Step 510: Through the interaction between the AMF/MMF and the SMF/SGW and the UPF/PGW, indicate that the UE restores the reachable state and the UPF/PGW can send a downlink data notification or start sending data.

Therefore, in application scenario 2, when the UE is temporarily unreachable, the NW can stop all paging and service and data transmission to the UE, to achieve the purpose of saving network resources.

### Application scenario 3

In application scenario 3, as shown in FIG. 6, the method used by the network to support saving network resources by means of the information indication of the UE can include the following steps:
Step 601: The RAN network element of the first network initiates paging to the UE.
Step 602: After receiving the paging from the first network, the UE returns first information to the RAN network element, such as indicating at least one of the following: the UE is temporarily unreachable or the UE is unreachable in a period in which the UE leaves from the first network; indicating that the terminal cannot receive the paging of the first network, and indicating stopping all paging of the terminal. The first information can be specifically as described above.

It should be noted that the information indication method provided by the embodiments of the present application can be performed by an information indication apparatus or a control module included in the information indication apparatus and configured to execute the information indicating method. In an embodiment of the application, the information sending apparatus provided in the embodiments of the application is described by using an example in which the information sending method is performed by an information sending apparatus.

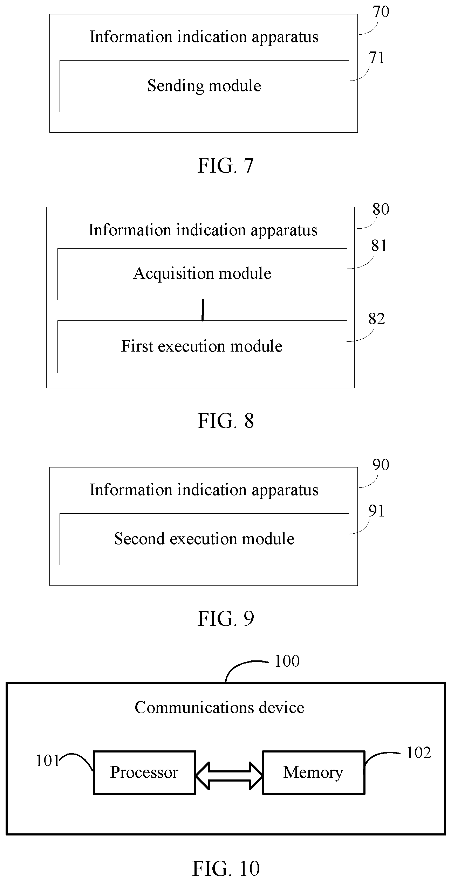

Referring to FIG. 7, an embodiment of the present application provides an information indication apparatus, applied to a terminal. As shown in FIG. 7, the information indication apparatus 70 includes:
a sending module 71 configured to send first information to a network device of a first network;
where the first information is used for at least one of the following:
   indicating that the terminal enters an unreachable state;
   indicating that the terminal stops receiving or cannot receive all data from the first network;
   indicating that the terminal stops receiving or cannot receive downlink data and/or paging from the first network;
   indicating that the terminal cannot respond to paging of the first network;
   indicating that the terminal cannot initiate location update; and
   requesting to buffer or delete data about the terminal in the first network.

Optionally, the sending first information to a network device of a first network includes: sending the first information to the network device of the first network in a case that it is determined that a first condition is met; where that the first condition is met includes at least one of the following:
the terminal enters an unreachable state for the first network;
the terminal cannot respond to the paging of the first network, or the terminal cannot respond to the paging of the first network during active leaving of the terminal from the first network;
the terminal cannot receive the paging of the first network, or the terminal cannot receive the paging of the first network during active leaving of the terminal from the first network;
a service of the terminal in the first network conflicts with a service in a second network, resulting in that the terminal is unreachable for the first network, cannot receive the paging of the first network, and/or cannot respond to the paging of the first network;
the terminal switches to the second network; and
the terminal is a multi-card terminal.

Optionally, the sending module 71 is specifically configured to perform one of the following:
sending, by the terminal, the first information to the first network while sending a terminal leaving indication; and
sending, by the terminal, the first information to the first network while requesting to leave.

Optionally, the first information takes effect in a period in which the terminal leaves from the first network, or the first information takes effect when it is determined that the terminal leaves from the first network.

The first information is used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

Optionally, the requesting to buffer or delete data about the terminal in the first network includes at least one of the following:
requesting to buffer or delete control plane data about the terminal in the first network; and
requesting to buffer or delete user plane data about the terminal in the first network.

Optionally, the indicating that the terminal stops receiving or cannot receive all data from the first network includes at least one of the following:
indicating that the terminal stops receiving or cannot receive all control plane data from the first network; and
indicating that the terminal stops receiving or cannot receive all user plane data from the first network;

Optionally, the information indication apparatus 70 further includes:
a third execution module configured to execute a third operation when it is determined that a second condition is met;
where the third operation includes at least one of the following: switching to the first network, sending second information to the network device of the first network, and sending a connection establishment request or a connection resume request to the network device of the first network;
where the second information is used for at least one of the following:
   indicating that the first information is invalid;
   indicating that the terminal exits from the unreachable state, or indicating that the terminal restores the reachable state;
   indicating that the terminal can receive the paging of the first network;
   indicating that the terminal can respond to the paging of the first network;
   indicating that the terminal requests to receive or can receive all data from the first network;
   indicating that the terminal requests to receive or can receive downlink data and/or paging from the first network;
   indicating that the terminal can initiate location update;
   requesting to receive data about the terminal;
where that the second condition is met includes at least one of the following:
   the terminal exists from the unreachable state or restores the reachable state with the first network;
   the terminal can receive the paging of the first network;
   the terminal can respond to the paging of the first network;
   the conflict between the service of the terminal in the first network and the service in the second network is canceled;
   the terminal has sent the first information to the first network;
   the terminal switches to the first network; and
   the terminal is a multi-card terminal.

Optionally, when the terminal does not receive paging from the first network, does not send data to the first network, and/or does not have a service with the first network, the third operation is immediately executed when it is determined that the second condition is met.

In this embodiment, the information indication apparatus 70 can perform all the processes performed in the method embodiment shown in FIG. 1 of this application, and achieve the same beneficial effects, which are not repeated herein to avoid repetition.

Referring to FIG. 8, an embodiment of the present application provides an information indication apparatus, applied to a network device. As shown in FIG. 8, the information indication apparatus 80 includes:
an acquisition module 81 configured to acquire first information; and
a first execution module 82 configured to execute a first operation according to the first information;
where the first information is used for at least one of the following:
   indicating that the terminal enters an unreachable state;
   indicating that the terminal stops receiving or cannot receive all data from the first network;
   indicating that the terminal stops receiving or cannot receive downlink data and/or paging from the first network;
   indicating that the terminal cannot respond to paging of the first network;
   indicating that the terminal cannot initiate location update; and
   requesting to buffer or delete data about the terminal in the first network;
the performing a first operation includes at least one of the following:
   saving the unreachable state of the terminal, saving the first information, stopping all paging about the terminal, suspending or deleting data about the terminal, suspending the configuration update of the terminal, sending the first information to other network devices, and informing other network devices that the terminal enters the unreachable state.

Optionally, the acquisition module 81 is specifically configured to perform one of the following: receiving the first information while receiving a leaving instruction of the terminal; and receiving the first information while receiving a leaving request of the terminal.

Optionally, the first information takes effect in a period in which the terminal leaves from the first network, or the first information takes effect when it is determined that the terminal leaves from the first network;
where the first information is used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

Optionally, the first execution module 82 is specifically configured to execute the first operation according to the first information in the period in which the terminal leaves from the first network.

Optionally, the first execution module 82 is further configured to execute one of the following:
acquiring second information, and executing a second operation according to the second information;
executing the second operation in a case of determining that the terminal returns to the network, obtaining the connection establishment request of the terminal, obtaining the connection restoration establishment of the terminal, or determining that the terminal enters a connection state with the first network; and
acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network.

The second operation includes at least one of the following: deleting the temporarily unreachable state of the terminal, deleting the first information, notifying other network devices that the first information is invalid, notifying other network devices that the terminal enters the reachable state, restoring the configuration update of the terminal, and restoring the data transmission to the terminal.

The second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update; and
requesting to receive data about the terminal.

In this embodiment, the information indication apparatus 80 can perform all the processes performed in the method embodiment shown in FIG. 2 of this application, and achieve the same beneficial effects, which are not repeated herein to avoid repetition.

Referring to FIG. 9, an embodiment of the present application provides an information indication apparatus, applied to a network device. As shown in FIG. 9, the information indication apparatus 90 includes:
a second execution module 91 configured to execute one of the following:
acquiring second information, and executing a second operation according to the second information;
executing the second operation in a case of determining that the terminal returns to the network, obtaining the connection establishment request of the terminal, obtaining the connection restoration establishment of the terminal, or determining that the terminal enters a connection state with the first network; and
acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network.

The second operation includes at least one of the following: deleting the unreachable state of the terminal, deleting the first information, notifying other network devices that the first information is invalid, notifying other network devices that the terminal enters the reachable state, restoring the configuration update of the terminal, and restoring the data transmission to the terminal.

The second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update; and
requesting to receive data about the terminal.

In this embodiment, the information indication apparatus 90 can perform all the processes performed in the method embodiment shown in FIG. 3 of this application, and achieve the same beneficial effects, which are not repeated herein to avoid repetition.

Optionally, as shown in FIG. 10, the embodiments of the present application also provide a communication device 100, which includes a processor 101, a memory 102, and programs or instructions stored in the memory 102 and executable on the processor 101. For example, when the communication device 100 is a terminal, the programs or instructions are executed by the processor 101 to realize the processes of the method embodiment shown in FIG. 1 and achieve the same technical effect. When the communication device 100 is a network device, the programs or instructions are executed by the processor 101 to perform the processes of the method embodiment shown in FIG. 2 or the processes of the method embodiment shown in FIG. 3, and the same technical effect can be achieved, which are not repeated herein to avoid repetition.

The embodiments of the present application also provide a readable storage medium, storing programs or instructions, where the programs or instructions, when executed by a processor, can perform the processes of the method embodiment shown in FIG. 1, or the processes of the method embodiment shown in FIG. 2, or the processes of the method embodiment shown in FIG. 3, and can achieve the same technical effect, which are not repeated herein to avoid repetition.

The processor is the processor in the terminal described in the above embodiment. The readable storage medium includes a computer-readable storage medium, such as computer Read-Only Memory (ROM), Random Access Memory (RAM), magnetic disk or optical disk, etc.

It should be understood that the chips mentioned in the embodiment of this application can also be called a system-level chip, a system chip, a chip system, or a system on chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without leaving from the purpose of this application and the protection scope of the claims, all of which fall within the protection of this application.

## Claims

1. An information indication method, applied to a terminal, and comprising:
sending first information to a network device of a first network;
wherein the first information is used for at least one of the following:
indicating that the terminal enters an unreachable state;
indicating that the terminal stops receiving or cannot receive all data from the first network;
indicating that the terminal stops receiving or cannot receive downlink data and/or paging from the first network;
indicating that the terminal cannot respond to paging of the first network;
indicating that the terminal cannot initiate location update; and
requesting to buffer or delete data about the terminal in the first network.

2. The method according to claim 1, wherein the sending first information to a network device of a first network comprises: sending the first information to the network device of the first network in a case that it is determined that a first condition is met;
wherein that the first condition is met comprises at least one of the following:
the terminal enters an unreachable state for the first network;
the terminal cannot respond to the paging of the first network, or the terminal cannot respond to the paging of the first network during active leaving of the terminal from the first network;
the terminal cannot receive the paging of the first network, or the terminal cannot receive the paging of the first network during active leaving of the terminal from the first network;
a service of the terminal in the first network conflicts with a service in a second network, resulting in that the terminal is unreachable for the first network, cannot receive the paging of the first network, and/or cannot respond to the paging of the first network;
the terminal switches to the second network; and
the terminal is a multi-card terminal.

3. The method according to claim 1, wherein the sending first information to a network device of a first network comprises one of the following:
sending, by the terminal, the first information to the first network while sending an indication indicate that the terminal is leaving; and
sending, by the terminal, the first information to the first network while requesting to leave.

4. The method according to claim 1, wherein the first information takes effect in a period in which the terminal leaves from the first network, or the first information takes effect when it is determined that the terminal leaves from the first network;
wherein the first information is used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

5. The method according to claim 1, wherein the requesting to buffer or delete data about the terminal in the first network comprises at least one of the following:
requesting to buffer or delete control plane data about the terminal in the first network; and
requesting to buffer or delete user plane data about the terminal in the first network.

6. The method according to claim 1, wherein the indicating that the terminal stops receiving or cannot receive all data from the first network comprises at least one of the following:
indicating that the terminal stops receiving or cannot receive all control plane data from the first network; and
indicating that the terminal stops receiving or cannot receive all user plane data from the first network;

7. The method according to claim 1, wherein in a case that it is determined that a second condition is met, the method further comprises:
executing a third operation; wherein the third operation comprises at least one of the following: switching to the first network, sending second information to the network device of the first network, and sending a connection establishment request or a connection resume request to the network device of the first network;
wherein the second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update;
requesting to receive data about the terminal;
wherein that the second condition is met comprises at least one of the following:
the terminal exists from the unreachable state or restores the reachable state with the first network;
the terminal can receive the paging of the first network;
the terminal can respond to the paging of the first network;
the conflict between the service of the terminal in the first network and the service in the second network is canceled;
the terminal has sent the first information to the first network;
the terminal switches to the first network; and
the terminal is a multi-card terminal.

8. The method according to claim 7, wherein when the terminal does not receive paging from the first network, does not send data to the first network, and/or does not have a service with the first network, the third operation is immediately executed when it is determined that the second condition is met.

9. An information indicating method, applied to a network device, and comprising:
obtaining first information; and
executing a first operation according to the first information;
wherein the first information is used for at least one of the following:
indicating that the terminal enters an unreachable state;
indicating that the terminal stops receiving or cannot receive all data from the first network;
indicating that the terminal stops receiving or cannot receive downlink data and/or paging from the first network;
indicating that the terminal cannot respond to paging of the first network;
indicating that the terminal cannot initiate location update; and
requesting to buffer or delete data about the terminal in the first network.
the performing a first operation comprises at least one of the following:
saving the unreachable state of the terminal, saving the first information, stopping all paging about the terminal, suspending or deleting data about the terminal, suspending the configuration update of the terminal, sending the first information to other network devices, and informing other network devices that the terminal enters the unreachable state.

10. The method according to claim 9, wherein the obtaining the first information comprises one of the following:
receiving the first information while receiving a leaving instruction of the terminal; and
receiving the first information while receiving a leaving request of the terminal.

11. The method according to claim 10, wherein the first information takes effect in a period in which the terminal leaves from the first network, or the first information takes effect when it is determined that the terminal leaves from the first network;
wherein the first information is used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

12. The method according to claim 9, wherein the executing a first operation according to the first information comprises:
in the period in which the terminal leaves from the first network, executing the first operation according to the first information.

13. The method according to claim 9, wherein the method further comprises one of the following:
acquiring second information, and executing a second operation according to the second information;
executing the second operation in a case of determining that the terminal returns to the network, obtaining the connection establishment request of the terminal, obtaining the connection restoration establishment of the terminal, or determining that the terminal enters a connection state with the first network;
acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network;
wherein the second operation comprises at least one of the following: deleting the temporarily unreachable state of the terminal, deleting the first information, notifying other network devices that the first information is invalid, notifying other network devices that the terminal enters the reachable state, restoring the configuration update of the terminal, and restoring the data transmission to the terminal;
wherein the second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update;
requesting to receive data about the terminal;

14. An information indicating method, applied to a network device, and comprising one of the following:
acquiring second information, and executing a second operation according to the second information;
executing the second operation in a case of determining that the terminal returns to the network, obtaining the connection establishment request of the terminal, obtaining the connection restoration establishment of the terminal, or determining that the terminal enters a connection state with the first network; and
acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network;
wherein the second operation comprises at least one of the following: deleting the unreachable state of the terminal, deleting the first information, notifying other network devices that the first information is invalid, notifying other network devices that the terminal enters the reachable state, restoring the configuration update of the terminal, and restoring the data transmission to the terminal;
wherein the second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update;
requesting to receive data about the terminal;

15. An information indication apparatus, applied to a terminal, and comprising:
a sending module configured to send first information to a network device of a first network;
wherein the first information is used for at least one of the following:
indicating that the terminal enters an unreachable state;
indicating that the terminal stops receiving or cannot receive all data from the first network;
indicating that the terminal stops receiving or cannot receive downlink data and/or paging from the first network;
indicating that the terminal cannot respond to paging of the first network;
indicating that the terminal cannot initiate location update; and
requesting to buffer or delete data about the terminal in the first network.

16. The information indication apparatus according to claim 15, wherein the sending module is specifically configured to: send the first information to the network device of the first network in a case that it is determined that a first condition is met; wherein that the first condition is met comprises at least one of the following:
the terminal enters an unreachable state for the first network;
the terminal cannot respond to the paging of the first network, or the terminal cannot respond to the paging of the first network during active leaving of the terminal from the first network;
the terminal cannot receive the paging of the first network, or the terminal cannot receive the paging of the first network during active leaving of the terminal from the first network;
a service of the terminal in the first network conflicts with a service in a second network, resulting in that the terminal is unreachable for the first network, cannot receive the paging of the first network, and/or cannot respond to the paging of the first network;
the terminal switches to the second network; and
the terminal is a multi-card terminal.

17. The information indication apparatus according to claim 15, wherein the sending module is specifically configured to perform one of the following:
sending, by the terminal, the first information to the first network while sending a terminal leaving indication; and
sending, by the terminal, the first information to the first network while requesting to leave.

18. The information indication apparatus according to claim 15, wherein the first information takes effect in a period in which the terminal leaves from the first network, or the first information takes effect when it is determined that the terminal leaves from the first network;
wherein the first information is used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

19. The information indication apparatus according to claim 15, wherein the requesting to buffer or delete data about the terminal in the first network comprises at least one of the following:
requesting to buffer or delete control plane data about the terminal in the first network; and
requesting to buffer or delete user plane data about the terminal in the first network.

20. The information indication apparatus according to claim 15, wherein the indicating that the terminal stops receiving or cannot receive all data from the first network comprises at least one of the following:
indicating that the terminal stops receiving or cannot receive all control plane data from the first network; and
indicating that the terminal stops receiving or cannot receive all user plane data from the first network;

21. The information indication apparatus according to claim 15, further comprising:
a third execution module configured to execute a third operation when it is determined that a second condition is met;
wherein the third operation comprises at least one of the following: switching to the first network, sending second information to the network device of the first network, and sending a connection establishment request or a connection resume request to the network device of the first network;
wherein the second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update;
requesting to receive data about the terminal;
wherein that the second condition is met comprises at least one of the following:
the terminal exists from the unreachable state or restores the reachable state with the first network;
the terminal can receive the paging of the first network;
the terminal can respond to the paging of the first network;
the conflict between the service of the terminal in the first network and the service in the second network is canceled;
the terminal has sent the first information to the first network;
the terminal switches to the first network; and
the terminal is a multi-card terminal.

22. The information indication apparatus according to claim 21, wherein when the terminal does not receive paging from the first network, does not send data to the first network, and/or does not have a service with the first network, the third operation is immediately executed when it is determined that the second condition is met.

23. An information indication apparatus, applied to a network device, and comprising:
an acquisition module configured to acquire first information; and
a first execution module configured to execute a first operation according to the first information;
wherein the first information is used for at least one of the following:
indicating that the terminal enters an unreachable state;
indicating that the terminal stops receiving or cannot receive all data from the first network;
indicating that the terminal stops receiving or cannot receive downlink data and/or paging from the first network;
indicating that the terminal cannot respond to paging of the first network;
indicating that the terminal cannot initiate location update; and
requesting to buffer or delete data about the terminal in the first network.
the performing a first operation comprises at least one of the following:
saving the unreachable state of the terminal, saving the first information, stopping all paging about the terminal, suspending or deleting data about the terminal, suspending the configuration update of the terminal, sending the first information to other network devices, and informing other network devices that the terminal enters the unreachable state.

24. The information indication apparatus according to claim 23, wherein the acquisition module is specifically configured to perform one of the following: receiving the first information while receiving a leaving instruction of the terminal; and receiving the first information while receiving a leaving request of the terminal.

25. The information indication apparatus according to claim 24, wherein the first information takes effect in a period in which the terminal leaves from the first network, or the first information takes effect when it is determined that the terminal leaves from the first network;
wherein the first information is used for at least one of the following:
indicating that in the period in which the terminal leaves from the first network, the terminal enters an unreachable state;
indicating that in the period in which the terminal leaves from the first network, the terminal stops receiving or cannot receive all data from the first network;
indicating that in the period in which the terminal leaves from the first network, the terminal stops receiving or cannot receive downlink data and/or paging from the first network;
indicating that in the period in which the terminal leaves from the first network, the terminal cannot respond to paging of the first network;
indicating that in the period in which the terminal leaves from the first network, the terminal cannot initiate location update; and
requesting to buffer or delete data about the terminal in the first network in the period in which the terminal leaves from the first network.

26. The information indication apparatus according to claim 23, wherein the first execution module is specifically configured to execute the first operation according to the first information in the period in which the terminal leaves from the first network.

27. The information indication apparatus according to claim 23, wherein the first execution module is further configured to execute one of the following:
acquiring second information, and executing a second operation according to the second information;
executing the second operation in a case of determining that the terminal returns to the network, obtaining the connection establishment request of the terminal, obtaining the connection restoration establishment of the terminal, or determining that the terminal enters a connection state with the first network; and
acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network;
wherein the second operation comprises at least one of the following: deleting the temporarily unreachable state of the terminal, deleting the first information, notifying other network devices that the first information is invalid, notifying other network devices that the terminal enters the reachable state, restoring the configuration update of the terminal, and restoring the data transmission to the terminal;
wherein the second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update;
requesting to receive data about the terminal;

28. An information indication apparatus, applied to a network device, and comprising:
a second execution module configured to execute one of the following:
acquiring second information, and executing a second operation according to the second information;
executing the second operation in a case of determining that the terminal returns to the network, obtaining the connection establishment request of the terminal, obtaining the connection restoration establishment of the terminal, or determining that the terminal enters a connection state with the first network; and
acquiring second information, and executing the second operation according to the second information in a case of determining that the terminal returns to the network, obtaining the connection establishment request of the terminal, obtaining the connection restoration establishment of the terminal, or determining that the terminal enters a connection state with the first network;
wherein the second operation comprises at least one of the following: deleting the unreachable state of the terminal, deleting the first information, notifying other network devices that the first information is invalid, notifying other network devices that the terminal enters the reachable state, restoring the configuration update of the terminal, and restoring the data transmission to the terminal;
wherein the second information is used for at least one of the following:
indicating that the first information is invalid;
indicating that the terminal exits from the unreachable state, or indicating that the terminal restores the reachable state;
indicating that the terminal can receive the paging of the first network;
indicating that the terminal can respond to the paging of the first network;
indicating that the terminal requests to receive or can receive all data from the first network;
indicating that the terminal requests to receive or can receive downlink data and/or paging from the first network;
indicating that the terminal can initiate location update;
requesting to receive data about the terminal;

29. A communication device, comprising a processor, a memory, and a computer program stored in the memory and executable on the processor, wherein the computer program, when executed by the processor, performs the steps of the information indication method according to any one of claims 1 to 8, or the steps of the information indication method according to any one of claims 9 to 13, or the steps of the information indication method according to claim 14.

30. A computer-readable storage medium, wherein a computer program is stored on the computer-readable storage medium, and the computer program, when executed by a processor, performs the steps of the information indication method according to any one of claims 1 to 8, or the steps of the information indication method according to any one of claims 9 to 13, or the steps of the information indication method according to claim 14.

31. A chip, comprising: a processor and a communication interface, wherein the communication interface is coupled with the processor, and the processor is configured to run programs or instructions to perform the steps of the information indication method according to any one of claims 1 to 8, or the steps of the information indication method according to any one of claims 9 to 13, or the steps of the information indication method according to claim 14.

32. A computer program product, wherein the program product is stored in a nonvolatile storage medium, and the program product is executed by at least one processor to perform the steps of the information indication method according to any one of claims 1 to 8, or the steps of the information indication method according to any one of claims 9 to 13, or the steps of the information indication method according to claim 14.

33. An information indication apparatus, wherein the information indication apparatus is configured to execute the steps of the information indicating method according to any one of claims 1 to 8.

34. An information indication apparatus, wherein the information indication apparatus is configured to execute the steps of the information indicating method according to any one of claims 9 to 13.

35. An information indication apparatus, configured to execute the steps of the information indication method according to claim 14.
